# EUROPÄISCHE PATENTSCHRIFT

(11) **EP 1 961 976 B1**
(45) Veröffentlichungstag und Bekanntmachung des Hinweises auf die Patenterteilung: **23.05.2012**
(21) Anmeldenummer: 08002324.5
(22) Anmeldetag: 08.02.2008
(51) Int. Cl.: F16B 19/10

(54) **Befestigungseinheit**
Fastening device
Dispositif de fixation

(30) Priorität: 26.02.2007 DE 102007009616
(43) Veröffentlichungstag der Anmeldung: 27.08.2008
(73) Patentinhaber: GESIPA Blindniettechnik GmbH, 60528 Frankfurt/Main (DE)
(72) Erfinder: Wille, Lothar, 64546 Mörfelden-Walldorf (DE)
(74) Vertreter: Knoblauch, Andreas

(56) Entgegenhaltungen:
- EP-A1- 0 663 537
- EP-A1- 1 359 330
- WO-A1-2006/038801
- DE-A1- 10 253 888
- DE-U1- 9 104 365
- JP-U- 59 127 911
- US-A- 5 044 849
- US-A1- 2004 247 414

## Beschreibung

Die Erfindung betrifft eine Befestigungseinheit, die eine Bindnietmutter, eine Scheibe und eine Schraube mit einem Schraubenkopf und einen Gewindeschaft aufweist, wobei die Blindnietmutter einen Setzkopf und einen Nietschaft aufweist und die Scheibe durch die Schraube an der Blindnietmutter gehalten wird.

Derartige Befestigungseinheiten haben sich beispielsweise für Befestigungsaufgaben bewährt, bei denen eine Schraubverbindung in dünnwandigen Materialien wie z.B. Blechen erforderlich ist, in die normalerweise kein Gewinde geschnitten werden kann. Die Befestigungseinheit wird dabei nach Art eines Blindniets in einem Blech befestigt. Im Folgenden wird der Begriff Blech stellvertretend für alle dünnwandigen Elemente verwendet, an denen beispielsweise ein Bauelement befestigt werden soll.

Aus DE 101 267 47 C2 ist eine Befestigungseinheit bekannt, bei der das Setzen der Befestigungseinheit und das Befestigen eines Bauteils an einem Blech in einem Arbeitsgang erfolgt. Dabei wird die Befestigungseinheit gleichzeitig durch das zu befestigende Bauteil und durch eine Öffnung des Blechs gesteckt, an dem das Bauteil befestigt werden soll. Durch Drehen der Schraube der Befestigungseinheit wird anschließend der Setzkopf ausgeformt, so dass eine feste Verbindung entsteht. Das Drehmoment, welches durch das Einschrauben der Schraube in die Blindnietmutter der Befestigungseinheit eingeleitet wird, wird auf das Blech übertragen, wobei dafür die Öffnung im Blech mehreckig ausgebildet ist und die Blindnietmutter einen entsprechenden Querschnitt aufweist.

Häufig ist es dabei problematisch, den mehreckigen Querschnitt der Blindnietmutter mit der mehreckigen Öffnung im Blech in Übereinstimmung zu bringen, vor allem wenn die Blindnietmutter bereits durch das zu befestigende Bauteil geführt ist. In der Regel wird zunächst die Befestigungseinheit durch das Bauteil und durch das Blech geführt, wobei in einem anschließenden Arbeitsgang die Schraube der Befestigungseinheit mit Hilfe eines Setzgeräts angezogen wird.

In WO 2006/038801 A1 ist ein Befestigungsmittel offenbart, das eine Schraube mit einem Schraubenkopf aufweist, die durch eine verformbare Hülse durchgeführt ist und an ihrem Ende mit einer Mutter versehen ist, die drehfest mit der verformbaren Hülse verbunden ist. Zwischen der verformbaren Hülse und dem Kopf der Schraube ist eine Abschlussplatte, eine Buchse und ein Verbindungselement angeordnet, die jeweils eine Öffnung aufweisen, durch die sich die Schraube erstreckt. Zwischen der Buchse und der Schraube und der Abschlussplatte ist dabei ein Freiraum vorgesehen, so dass eine freie Rotationsbewegung der Buchse möglich ist. Zum Setzen des Befestigungsmittels wird dieses mit der verformbaren Hülse in eine Bohrung eingesetzt und über die Buchse, die mit Hilfe einer Klemm-Schraube mit der Schraube verbindbar ist, ein Drehmoment in die Schraube eingebracht. Dadurch wird die Mutter angezogen, wobei sich die verformbare Hülse verformt und mit ihrer Auβenseite an eine Innenseite der Bohrung anlehnt. Nach erfolgtem Setzen wird die Klemm-Schraube entfernt, so dass ein unbefugtes Lösen der Schraube nicht möglich ist.

In DE 102 53 888 A1 ist eine Befestigungseinheit beschrieben, die eine Blindnietmutter, eine Schraube und eine Scheibe aufweist. Die Scheibe kann dabei Drehmomentangriffsflächen aufweisen.

US 2004/0247414 A1 beschreibt einen Blindniet mit einem Zugdorn. Durch Ziehen des Zugdorns wird ein Schaft des Blindniets verformt, wobei sich ein Setzkopf an einer Seite eines Bauteils anlegt und ein durch die Verformung des Nietschafts bildender Schließkopf an die andere Seite des Bauteils. Damit wird der Blindniet formschlüssig gehalten.

JP 59-127911 zeigt eine verformbare Hülse mit einem Setzkopf und einem Schaft, der verformt werden kann, so dass sich ein Schließkopf bildet und damit die Hülse formschlüssig mit einem Bauteil verbunden werden kann.

Der Erfindung liegt die Aufgabe zugrunde, eine Befestigungseinheit bereitzustellen, die ein vereinfachtes Setzen ermöglicht.

Diese Aufgabe wird bei einer Befestigungseinheit der eingangs genannten Art dadurch gelöst, dass die Scheibe eine Drehmomentangriffsfläche und einen Vorsprung aufweist, der zumindest abschnittsweise über die Drehmomentsangriffsfläche übersteht und am von der Blindnietmutter wegweisenden Ende der Scheibe angeordnet ist, wobei der Vorsprung von einer Setzeinheit übergreifbar ist, die mit der Drehmomentangriffsfläche in Eingriff bringbar ist.

Dadurch ergeben sich mehrere Vorteile. Zum Einen kann ein Setzwerkzeug am Vorsprung der Scheibe eingreifen und dadurch die Befestigungseinheit sicher am Setzwerkzeug halten. Dadurch ist es möglich, die bereits mit dem Setzwerkzeug verbundene Befestigungseinheit durch das zu befestigende Bauteil und das Blech zu führen, ohne dass die Gefahr besteht, die Befestigungseinheit vom Setzwerkzeug zu verlieren. Da die Befestigungseinheit bereits mit Hilfe des Setzwerkzeuges eingefädelt wird, kann das Setzen und Befestigen der Befestigungseinheit in einem Arbeitsschritt erfolgen, ohne dass ein Umgreifen oder Ähnliches erforderlich ist.

Durch die Drehmomentsangriffsfläche der Scheibe kann gleichzeitig ein Mitdrehen der Scheibe beim Anziehen der Schraube verhindert werden. Dies ist besonders dann wünschenswert, wenn empfindliche Bauteile an einem Blech befestigt werden, da dann keine Relativbewegung zwischen der Scheibe und dem Bauteil auftritt.

Da der Vorsprung am von der Blindnietmutter wegweisenden Ende der Scheibe angeordnet ist, ist ein einfaches Übergreifen des Vorsprungs durch eine Setzeinheit möglich. Gleichzeitig wird für die Drehmomentsangriffsfläche ausreichend Raum gelassen. Dabei kann beispielsweise das Element des Setzwerkzeugs, das den Vorsprung übergreift, auch mit der Drehmomentangriffsfläche der Scheibe in Eingriff gebracht werden.

Dabei ist besonders bevorzugt, dass die Drehmomentangriffsfläche durch mindestens zwei zueinander parallele, ebene Flächen gebildet ist. Eine derartige Ausbildung bietet einfache Kopplungsmöglichkeiten mit dem Setzwerkzeug. Dies kann beispielsweise eine gabelförmige Aufnahme aufweisen. Dabei ist auch die Verwendung beispielsweise eines herkömmlichen Schraubenschlüssels denkbar.

Vorzugsweise ist die Drehmomentangriffsfläche als Vierkant ausgebildet. Eine derartige Ausbildung ist einfach herzustellen und vereinfacht aufgrund der Symmetrie ein Verbinden mit dem Setzwerkzeug.

Vorzugsweise weist die Scheibe eine Ausnehmung auf, in die der Schraubenkopf aufgenommen ist. Der Schraubenkopf steht also nicht über die Oberfläche der Scheibe über. Dadurch ergibt sich ein harmonischer Gesamteindruck. Gleichzeitig wird erreicht, dass die Befestigungseinheit nur wenig über das zu befestigende Bauteil übersteht. Überstehende, eventuell verletzungsträchtige Kanten werden so vermieden.

Vorzugsweise ist die Scheibe unverlierbar mit der Schraube verbunden. Eine Verliersicherung kann beispielsweise dadurch erreicht werden, dass die Scheibe leicht verformt wird, nachdem die Schraube durch die Scheibe hindurch gesteckt ist. Dadurch vereinfacht sich die Handhabung. Zum Zusammenbau der Befestigungseinheit muss dann nur noch die Schraube in die Blindnietmutter eingeschraubt werden, die Scheibe befindet sich dann bereits an der Schraube.

Vorzugsweise weist die Blindnietmutter am Setzkopf an der dem Nietschaft gegenüberliegenden Seite einen verformbaren Fortsatz auf. Durch Anziehen der Schraube wird zunächst der Schließkopf in herkömmlicher Weise ausgeformt. Damit ist die Befestigungseinheit bereits im Blech ausreichend befestigt. Dadurch, dass der Fortsatz ebenfalls verformbar ist, wird sichergestellt, dass auch das Bauteil mit der notwendigen Kraft am Blech festgehalten werden kann, wenn die Schraube weiter gedreht wird, da sich durch die Verformung des Fortsatzes der Abstand der Scheibe zum Blech verringert. Durch Drehen der Schraube erreicht man also eine zuverlässige Befestigung der Blindnietmutter im Blech und ebenso eine zuverlässige Befestigung des Bauteils.

Dabei ist besonders bevorzugt, dass die Scheibe an ihrer der Blindnietmutter zugewandten Seite eine Vertiefung aufweist. Diese Vertiefung kann dabei zumindest teilweise den verformbaren Fortsatz aufnehmen. Durch die Wahl einer Scheibe mit einer entsprechend tiefen Vertiefung kann dabei die Befestigungseinheit an unterschiedliche Bauteile angepasst werden. Während herkömmlicherweise die Blindnietmutter in Abhängigkeit der Dicke des zu befestigenden Bauteils ausgesucht wird, erfolgt nun eine Anpassung durch die Wahl der Scheibe. Eine Anpassung der Scheibe lässt sich dabei einfacher vornehmen als eine Veränderung der Länge der Blindnietmutter.

Vorzugsweise weist die Vertiefung einen nach innen geneigten Boden auf. Bei einer Verformung des Fortsatzes kann dieser dann entlang des nach innen geneigten Bodens rutschen. Dadurch ergibt sich eine definierte Verformung.

Bevorzugterweise sind die Scheibe und die Blindnietmutter drehfest miteinander verbunden. Dadurch ist es möglich, die Befestigungseinheit auch in Öffnungen des Blechs zu befestigen, die einen runden Querschnitt aufweisen. Das Drehmoment, welches durch Drehen der Schraube auf die Blindnietmutter übertragen wird, wird dann durch die Scheibe und von dort über die Drehmomentangriffsfläche durch das Setzwerkzeug aufgenommen. Runde Löcher sind in Blechen nicht nur einfacher herzustellen, auch das Setzen der Befestigungseinheit wird dadurch vereinfacht. Der Setzvorgang kann dann schneller erfolgen, so dass Kosten eingespart werden können.

Vorzugsweise weist die Scheibe an ihrer der Blindnietmutter zugewandten Seite Ausnehmungen auf, in die Vorsprünge der Blindnietmutter einbringbar sind. Dadurch wird zwischen der Scheibe und der Blindnietmutter ein Formschluss hergestellt, so dass Drehmomente von der Blindnietmutter sicher auf die Scheibe übertragen werden können.

In einem anderen bevorzugten Ausführungsbeispiel weist die Blindnietmutter mindestens einen Abschnitt mit mehreckigem Querschnitt auf. Mit Hilfe eines derartigen mehreckigen Querschnitts kann die Blindnietmutter drehfest in einem Blech gehalten werden, so dass ein einfaches Einschrauben der Schraube möglich ist. Eine drehfeste Verbindung zwischen Scheibe und Blindnietmutter ist dann nicht notwendig.

Vorzugsweise weist die Schraube ein selbstfurchendes Gewinde auf. Dies vereinfacht die Herstellung der Befestigungseinheit. Die Blindnietmutter wird einfach als Fließpressteil ausgebildet. Ein Innengewinde muss vor dem Zusammensetzen von Blindnietmutter und Schraube nicht gebildet werden. Dieses Innengewinde wird vielmehr erst beim Eindrehen der Schraube in die Blindnietmutter erzeugt. Das Eindrehen ist aber ohnehin notwendig, so dass hierdurch kein zusätzlicher Arbeitsschritt benötigt wird.

Die Erfindung wird im Folgenden anhand bevorzugter Ausführungsbeispiele in Verbindung mit den Zeichnungen beschrieben. Darin zeigen:
- Fig. 1: eine schematische Darstellung der Befestigungseinheit in Schnittansicht,
- Fig. 2: eine Schraube mit Scheibe in räumlicher Darstellung,
- Fig. 3: eine teilweise geschnittene Ansicht der Befestigungseinheit in räumlicher Darstellung,
- Fig. 4: eine Schnittdarstellung der Befestigungseinheit, die bereits durch ein Bauteil und ein Blech geführt ist,
- Fig. 5: eine Anordnung wie in Fig. 4 mit einem dünneren Bauteil und
- Fig. 6-8: verschiedene Ausgestaltungen der Blindnietmutter.

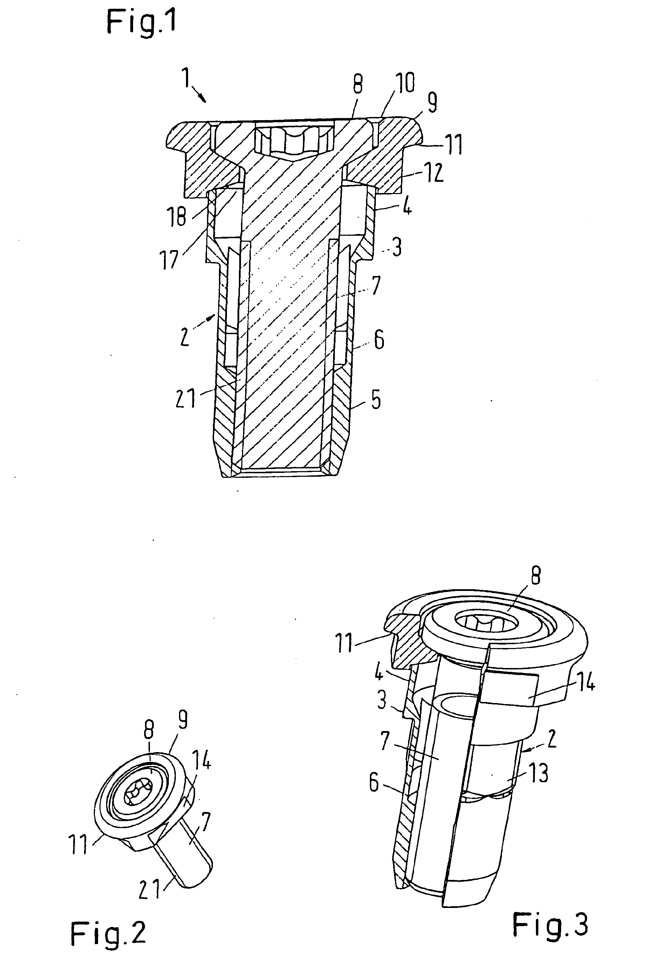

Fig. 1 zeigt in schematischer Darstellung eine Befestigungseinheit 1 mit einer Blindnietmutter 2, die einen Setzkopf 3 mit einem verformbaren Fortsatz 4 und einen Nietschaft 5 aufweist. Der Nietschaft 5 weist einen verformbaren Bereich 6 zur Bildung eines Schließkopfes auf. In die Blindnietmutter 2 ist eine Schraube 7 eingeschraubt, die einen Schraubenkopf 8 und einen Gewindeschaft mit einem Gewinde 21 aufweist. Zwischen dem Schraubenkopf 8 und dem verformbaren Fortsatz 4 der Blindnietmutter 2 ist eine Scheibe 9 angeordnet.

Das Gewinde 21 ist als selbstfurchendes Gewinde ausgebildet. Dies hat den Vorteil, dass man die Blindnietmutter 2 als Fließpressteil herstellen kann, ohne bereits ein Innengewinde ausbilden zu müssen. Damit wird beim Herstellen der Blindnietmutter 2 ein Arbeitsschritt eingespart. Das Innengewinde wird dann beim Einschrauben der Schraube 7 durch das Gewinde 21 gebildet. Das Einschrauben der Schraube 7 in die Blindnietmutter 2 ist zum Herstellen der Befestigungseinheit aber ohnehin erforderlich.

Die Scheibe 9 weist eine Ausnehmung 10 auf, in der der Schraubenkopf 8 angeordnet ist. Ferner ist die Scheibe 9 mit einem Vorsprung 11 versehen. An den Seiten der Scheibe 9 sind Drehmomentangriffsflächen 12 angeordnet, über die der Vorsprung 11 abschnittsweise übersteht.

Zum Setzen der Befestigungseinheit 1 kann ein entsprechendes Setzwerkzeug den Vorsprung 11 der Scheibe 9 umgreifen und so die Befestigungseinheit 1 sicher am Setzwerkzeug halten. Mit Hilfe der Drehmomentangriffsflächen 12 ist es dabei möglich, ein Mitdrehen der Scheibe 9 beim Anziehen der Schraube 7 zu verhindern. Durch Anziehen der Schraube 7 erfolgt eine Verformung des verformbaren Bereichs 6 des Nietschafts 5, so dass sich ein Schließkopf ausbildet und damit die Befestigungseinheit 1 sicher beispielsweise in einem nicht dargestellten Blech gehalten wird. Anschließend oder gleichzeitig erfolgt eine Verformung des verformbaren Fortsatzes 4 der Blindnietmutter 2, wobei die Scheibe 9 in Richtung des nicht dargestellten Blechs gedrückt wird. Damit wird sichergestellt, dass ein zu befestigendes Bauteil durch die Scheibe 9 gegen das Blech gedrückt wird, an dem es befestigt werden soll.

Fig. 3 zeigt die Befestigungseinheit nach Fig. 1 in teilgeschnittener, dreidimensionaler Darstellung. Zusätzlich weist die Blindnietmutter 2 einen mehreckigen Querschnitt in dem Bereich des Nietschafts 5 auf, der in ein nicht dargestelltes Blech eingeführt wird. Das Blech weist dafür eine dem mehreckigen Querschnitt der Blindnietmutter entsprechende Öffnung auf. Dadurch kann das über die Schraube eingeleitete Drehmoment beim Einschrauben der Schraube vom Blech aufgenommen werden. Die Drehmomentangriffsfläche 12 ist als Vierkant 14 ausgebildet. Die Schraube 7 ist als Torxschraube ausgebildet und weist eine dementsprechende Aufnahme im Schraubenkopf 8 auf. Allerdings sind auch andere Ausführungen der Schraube 7 denkbar.

In Fig. 2 ist die Schraube 7 mit der mit ihr verbundenen Scheibe 9 dargestellt. Die Drehmomentangriffsfläche 12 der Scheibe 9 ist als Vierkant 14 ausgebildet. Die Ecken des Vierkants 14 sind abgerundet, wobei der Vorsprung 11 im Bereich der abgerundeten Ecken nicht übersteht. Es hat sich herausgestellt, dass ein Vorsprung im Bereich der ebenen Flächen des Vierkants 14 ausreichend ist, um die Befestigungseinheit sicher in einem Setzwerkzeug halten zu können.

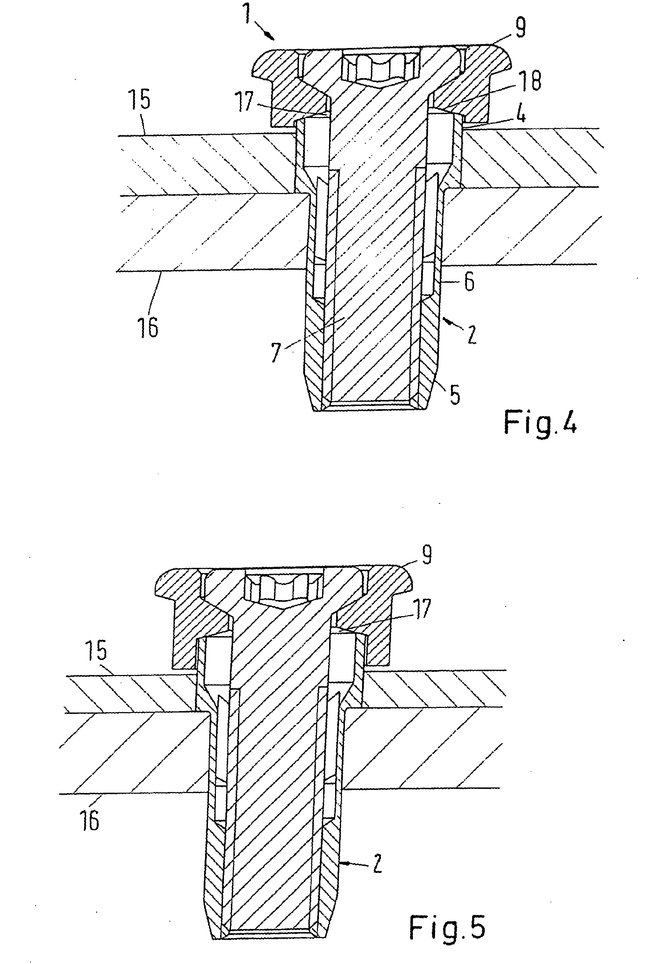

Fig. 4 zeigt eine gesetzte Befestigungseinheit 1 vor ihrer Verformung. Die Befestigungseinheit 1 ist dabei durch ein zu befestigendes Bauteil 15 und durch ein Blech 16 geführt, an dem das Bauteil 15 befestigt werden soll. Die Schraube 7 ist noch nicht angezogen worden, so dass noch keine Verformung des verformbaren Bereichs 6 des Nietschafts 5 zur Bildung des Schließkopfes und auch keine Verformung des verformbaren Fortsatzes 4 am Setzkopf 3 der Blindnietmutter 2 stattgefunden hat. Zwischen dem Bauteil 15 und der Scheibe 9 befindet sich ein Luftspalt. Erfolgt nun zunächst eine Verformung des verformbaren Bereiches 6 zur Bildung des Schließkopfes, wird keine Kraft auf das Bauteil 15 ausgeübt. Erst wenn der Schließkopf ausgebildet ist, erfolgt eine Verformung des Fortsatzes 4, wodurch der Luftspalt zwischen Scheibe 9 und Bauteil 15 geschlossen wird. Das Bauteil 15 wird dabei durch die Scheibe 9 gegen das Blech 16 gedrückt. Geringe Abweichungen in der Dicke des Bauteils 15 werden dabei ausgeglichen.

Ein späteres Verformen des verformbaren Fortsatzes 4 wird beispielsweise dadurch erreicht, dass der Fortsatz 4 eine größere Wandstärke als der verformbare Bereich 6 aufweist. Um eine definierte Verformung des Fortsatzes 4 zu erreichen, weist die Scheibe 9 eine Vertiefung 17 mit einem nach innen geneigten Boden 18 auf. Durch das Einschrauben der Schraube 7 rutscht dann der Fortsatz 4 entlang des nach innen geneigten Bodens 18 nach innen, also in Richtung der Schraubachse.

Die Befestigungseinheit 1 kann durch die Wahl einer Scheibe 9 mit einer entsprechenden Vertiefung 17 an unterschiedliche Bauteildicken angepasst werden. Dies wird durch einen Vergleich der Fig. 4 mit Fig. 5 deutlich. In Fig. 5 wird ein Bauteil 15 am Blech 16 befestigt, das eine geringere Dicke als das Bauteil 15 in Fig. 4 aufweist. Dementsprechend ist die Vertiefung 17 in der Scheibe 9 tiefer ausgebildet, so dass ein größerer Abschnitt der Blindnietmutter 2 in der Vertiefung 17 der Scheibe 9 aufgenommen wird. Eine Änderung an der Blindnietmutter 2 zur Anpassung an unterschiedliche Stärken des Bauteils 15 ist nicht erforderlich. Auch das gleiche Setzwerkzeug kann verwendet werden.

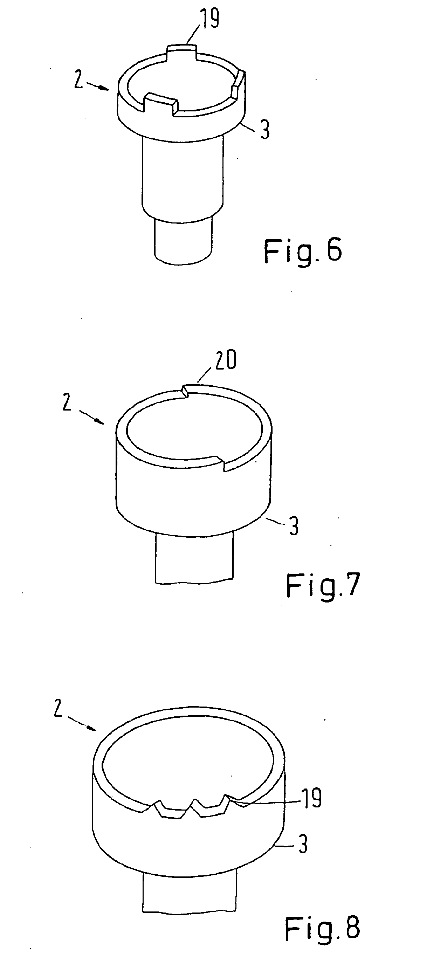

In Fig. 6 ist schematisch eine Blindnietmutter 2 dargestellt, die am Setzkopf 3 Vorsprünge 19 aufweist, die mit entsprechenden Ausnehmungen in der Scheibe 9 in Eingriff bringbar sind. Dadurch wird ein Mitdrehen der Blindnietmutter 2 verhindert, wenn die Blindnietmutter 2 keinen mehreckigen Querschnitt 13 im Bereich des Blechs 16 aufweist, so dass die über die Schraube 7 eingeleiteten Drehmomente nicht über das Blech 16 aufgenommen werden.

In Fig. 7 sind die Vorsprünge 19 als Nasen 20 ausgebildet, die gegen die Drehrichtung der Blindnietmutter 2 gerichtet sind. Die Scheibe 9 weist dann entsprechende Ausnehmungen auf.

In Fig. 8 sind die Vorsprünge 19 der Blindnietmutter 2 als feine Verzahnung ausgebildet, die sich über den gesamten Umfang erstrecken kann. Auch hierbei ist es wünschenswert, aber nicht unbedingt erforderlich, dass die Scheibe 9 entsprechende Vertiefungen aufweist.

Der Vorteil bei einer Ausgestaltung der Blindnietmutter 2, wie sie beispielhaft in den Figuren 6 bis 8 dargestellt ist, liegt darin, dass die Befestigungseinheit 1 auch in runde Öffnungen im Blech befestigt werden kann. Gleichzeitig kann auf einen mehreckigen Querschnitt 13 an der Blindnietmutter 2 verzichtet werden. Beim Setzen muss dadurch der mehreckige Querschnitt 13 der Blindnietmutter 2 nicht mit der entsprechend geformten Öffnung im Blech 16 in Deckung gebracht werden. Die Winkelstellung der Befestigungseinheit 1 ist beim Setzen daher ohne Belang. Dadurch ist ein schnelleres Setzen der Befestigungseinheit 1 möglich.

## Patentansprüche

1. Befestigungseinheit (1), die eine Blindnietmutte (2), eine Scheibe (9) und eine Schraube (7) mit einem Schraubenkopf (8) und einen Gewindeschaft aufweist, wobei die Blindnietmutter (2) einen Setzkopf (3) und einen Nietschaft (5) aufweist und die Scheibe (9) durch die Schraube (7) an der Blindnietmutter (2) gehalten wird, **dadurch gekennzeichnet, dass** die Scheibe (9) eine Drehmomentangriffsfläche (12) und einen Vorsprung (11) aufweist, der zumindest abschnittsweise über die Drehmomentangriffsfläche (12) übersteht und am von der Blindnietmutter (2) wegweisenden Ende der Scheibe (9) angeordnet ist, wobei der Vorsprung (11) von einer Setzeinheit übergreifbar ist, die mit der Drehmomentangriffsfläche (12) in Eingriff bringbar ist.

2. Befestigungseinheit nach Anspruch 1, **dadurch gekennzeichnet, dass** die Drehmomentangriffsfläche (12) durch mindestens zwei zueinander parallele Flächen gebildet ist.

3. Befestigungseinheit nach einem der Ansprüche 1 bis 2, **dadurch gekennzeichnet, dass** die Drehmomentangriffsfläche (12) als Vierkant (14) ausgebildet ist.

4. Befestigungseinheit nach einem der Ansprüche 1 bis 3, **dadurch gekennzeichnet, dass** die Scheibe (9) eine Ausnehmung (10) aufweist, in die der Schraubenkopf (8) aufgenommen ist.

5. Befestigungseinheit nach einem der Ansprüche 1 bis 4, **dadurch gekennzeichnet, dass** die Scheibe (9) unverlierbar mit der Schraube (7) verbunden ist.

6. Befestigungseinheit nach einem der Ansprüche 1 bis 5, **dadurch gekennzeichnet, dass** die Blindnietmutter (2) am Setzkopf (3) an der dem Nietschaft (5) gegenüberliegenden Seite einen verformbaren Fortsatz (4) aufweist.

7. Befestigungseinheit nach einem der Ansprüche 1 bis 6, **dadurch gekennzeichnet, dass** die Scheibe (9) an ihrer der Blindnietmutter (2) zugewandten Seite eine Vertiefung (17) aufweist.

8. Befestigungseinheit nach Anspruch 7, **dadurch gekennzeichnet, dass** die Vertiefung (17) einen nach innen geneigten Boden (18) aufweist.

9. Befestigungseinheit nach einem der Ansprüche 1 bis 8, **dadurch gekennzeichnet, dass** die Scheibe (9) und die Blindnietmutter (2) drehfest miteinander gekoppelt sind.

10. Befestigungseinheit nach Anspruch 9, **dadurch gekennzeichnet, dass** die Scheibe (9) an ihrer der Blindnietmutter (2) zugewandten Seite Ausnehmungen aufweist, in die Vorsprünge (19) der Blindnietmutter (2) einbringbar sind.

11. Befestigungseinheit nach einem der Ansprüche 1 bis 10, **dadurch gekennzeichnet, dass** die Blindnietmutter (2) mindestens einen Abschnitt mit mehreckigem Querschnitt (13) aufweist.

12. Befestigungseinheit nach einem der Ansprüche 1 bis 11, **dadurch gekennzeichnet, dass** die Schraube (7) ein selbstfurchendes Gewinde aufweist.

## Claims

1. Fastening unit (1) having a blind rivet nut (2), a washer (9) and a screw (7) comprising a screw head (8) and a threaded shank, wherein the blind rivet nut (2) has a set head (3) and a rivet shank (5) and the washer (9) is held on the blind rivet nut (2) by the screw (7), **characterised in that** the washer (9) has a torque application surface (12) and a flange (11), which projects beyond the torque application surface (12) at least in some portions and is arranged on the end of the washer (9) pointing away from the blind rivet nut (2), it being possible for the flange (11) to be overlapped by a setting unit, which can be brought into engagement with the torque application surface (12).

2. Fastening unit according to claim 1, **characterised in that** the torque application surface (12) is formed by at least two mutually parallel surfaces.

3. Fastening unit according to any one of claims 1 to 2, **characterised in that** the torque application surface (12) is configured as a square (14).

4. Fastening unit according to any one of claims 1 to 3, **characterised in that** the washer (9) has a recess (10) which receives the screw head (8).

5. Fastening unit according to any one of claims 1 to 4, **characterised in that** the washer (9) is undetachably connected to the screw (7).

6. Fastening unit according to any one of claims 1 to 5, **characterised in that** the blind rivet nut (2) has a deformable extension (4) on the end of the set head (3) that is remote from the rivet shank (5).

7. Fastening unit according to any one of claims 1 to 6, **characterised in that** on the side thereof facing towards the blind rivet nut (2), the washer (9) has a depression (17).

8. Fastening unit according to claim 7, **characterised in that** the depression (17) has an inwardly inclined base (18).

9. Fastening unit according to any one of claims 1 to 8, **characterised in that** the washer (9) and the blind rivet nut (2) are rotationally engaged with one another.

10. Fastening unit according to claim 9, **characterised in that** on the side thereof facing towards the blind rivet nut (2), the washer (9) has recesses into which projections (19) of the blind rivet nut (2) can be inserted.

11. Fastening unit according to any one of claims 1 to 10, **characterised in that** the blind rivet nut (2) has at least one portion with a polygonal cross section (13).

12. Fastening unit according to any one of claims 1 to 11, **characterised in that** the screw (7) has a self-tapping thread.

## Revendications

1. Dispositif de fixation (1) qui présente un écrou à sertir en aveugle (2), une rondelle (9) et une vis (7) dotée d'une tête de vis (8) et une tige filetée, sachant que l'écrou à sertir en aveugle (2) présente une tête de pose (3) et une tige de rivet (5) et la rondelle (9) est maintenue par la vis (7) sur l'écrou à sertir en aveugle (2), **caractérisé en ce que** la rondelle (9) présente une surface d'attaque de couple (12) et une saillie (11) qui dépasse au moins par section de la surface d'attaque de couple (12) et est disposée sur l'extrémité dirigée loin de l'écrou à sertir en aveugle (2) de la rondelle (9), sachant que la saillie (11) peut être recouverte par une unité de pose pouvant venir en prise avec la surface d'attaque de couple (12).

2. Dispositif de fixation selon la revendication 1, **caractérisé en ce que** la surface d'attaque de couple (12) est constituée d'au moins deux surfaces parallèles l'une à l'autre.

3. Dispositif de fixation selon l'une quelconque des revendications 1 à 2, **caractérisé en ce que** la surface d'attaque de couple (12) est réalisée comme un carré (14).

4. Dispositif de fixation selon l'une quelconque des revendications 1 à 3, **caractérisé en ce que** la rondelle (9) présente un évidement (10) recevant la tête de vis (8).

5. Dispositif de fixation selon l'une quelconque des revendications 1 à 4, **caractérisé en ce que** la rondelle (9) est reliée de manière imperdable à la vis (7).

6. Dispositif de fixation selon l'une quelconque des revendications 1 à 5, **caractérisé en ce que** l'écrou à sertir en aveugle (2) présente un prolongement (4) déformable sur la tête de pose (3) sur le côté opposé à la tige de rivet (5).

7. Dispositif de fixation selon l'une quelconque des revendications 1 à 6, **caractérisé en ce que** la rondelle (9) présente une cavité (17) sur son côté tourné vers l'écrou à sertir en aveugle (2).

8. Dispositif de fixation selon la revendication 7, **caractérisé en ce que** la cavité (17) présente un fond (18) incliné vers l'intérieur.

9. Dispositif de fixation selon l'une quelconque des revendications 1 à 8, **caractérisé en ce que** la rondelle (9) et l'écrou à sertir en aveugle (2) sont couplés l'un à l'autre de manière solidaire en rotation.

10. Dispositif de fixation selon la revendication 9, **caractérisé en ce que** la rondelle (9) présente sur son côté tourné vers l'écrou à sertir en aveugle (2), des évidements, dans lesquels des saillies (19) de l'écrou à sertir en aveugle (2) peuvent être introduites.

11. Dispositif de fixation selon l'une quelconque des revendications 1 à 10, **caractérisé en ce que** l'écrou à sertir en aveugle (2) présente au moins une partie dotée d'une section (13) transversale polygonale.

12. Dispositif de fixation selon l'une quelconque des revendications 1 à 11, **caractérisé en ce que** la vis (7) présente un filet autotaraudeur.
